# EUROPÄISCHE PATENTSCHRIFT

(11) **EP 0 898 442 B1**
(45) Veröffentlichungstag und Bekanntmachung des Hinweises auf die Patenterteilung: **05.03.2003**
(21) Anmeldenummer: 97114290.6
(22) Anmeldetag: 19.08.1997
(51) Int. Cl.: H05B 37/02, H02J 13/00

(54) **Verfahren zur Initialisierung und Überwachung wenigstens eines elektrischen Verbrauchers und Schaltungsanordnung**
Process and circuit for initialising and monitoring at least one electrical load
Procédé et circuit pour l'initialisation et la surveillance d'au moins un récepteur électrique

(43) Veröffentlichungstag der Anmeldung: 24.02.1999
(73) Patentinhaber: CEAG Sicherheitstechnik GmbH, 59494 Soest (DE)
(72) Erfinder: Prasuhn, Jürgen, 59494 Soest (DE)
(74) Vertreter: Grünecker, Kinkeldey, Stockmair & Schwanhäusser Anwaltssozietät

(56) Entgegenhaltungen:
- EP-A- 0 639 938
- DE-A- 4 312 757
- DE-A- 4 422 215
- DE-A- 19 530 643
- LUGER S ET AL: "BELEUCHTUNG WIRD BUSFAEHIG" ELEKTRONIK, Bd. 41, Nr. 26, 22.Dezember 1992, Seiten 26-30, XP000327405

## Beschreibung

Die Erfindung betrifft ein Verfahren zur Initialisierung und Überwachung wenigstens eines elektrischen Initialisierungsverbrauchers, insbesondere eines Leuchtmittels, aus einer Mehrzahl mittels einer Datenverbindung mit einer Zentraleinrichtung verbundenen elektrischen Verbraucher, wobei die Zentraleinrichtung zumindest ein Initialisierungssignal über die Datenverbindung an die Verbraucher übermittelt. Eine entsprechende Schaltungsanordnung insbesondere zur Durchführung dieses Verfahrens weist wenigstens eine Zentraleinrichtung und eine Anzahl von mit dieser über eine Datenverbindung verschaltete, elektrische Verbraucher, insbesondere Leuchtmittel, auf, wobei die Zentraleinrichtung und die Verbraucher an elektrische Versorgungsleitungen angeschlossen sind.

Ein solches Verfahren bzw. Schaltungsanordnung ist aus der DE 19529751 bekannt. Bei dieser vorbekannten Schaltungsanordnung dienen die elektrischen Versorgungsleitungen gleichzeitig als Datenverbindung, über die entsprechende Daten oder Signale von der Zentraleinrichtung an parallel bezüglich der Versorgungsleitungen geschaltete elektrische Verbraucher übermittelbar sind. Eine Initialisierung und Überwachung beispielsweise eines zu initialisierenden Verbrauchers erfolgt ebenfalls über die Versorgungsleitungen als Datenverbindung. Eine solche Initialisierung kann beispielsweise für solche Verbraucher erforderlich sein, die neu der Schaltungsanordnung hinzugefügt werden oder bezüglich ihrer Funktion oder ihrer Einsatzzeit verändert werden.

Die elektrischen Verbraucher wie auch der Initialisierungsverbraucher können beispielsweise ein Leuchtmittel wie eine Glühlampe, Leuchtstofflampe, Halogenlampe, Quecksilberdampflampe oder dergleichen, Thermostaten, elektronische Übertragungs- und Empfangsgeräte, Noteinrichtungen oder dergleichen sein. Durch die Zentraleinrichtung kann dabei gleichzeitig über die Datenverbindung eine Überwachung der elektrischen Verbraucher, wie beispielsweise eines Ladungszustandes einer Batterie einer Notleuchte, eines Betriebszustandes, eines Verbraucherstatus oder dergleichen, erfolgen.

Bei dem vorbekannten Verfahren bzw. der vorbekannten Schaltungsanordnung erfolgt die Übermittlung der Signale mittels Hochfrequenz, die auf die Netzspannung der Versorgungsleitungen aufmoduliert wird. Dabei muß der Verbraucher, der das Signal empfangen soll, bereits über eine Adresse verfügen, die der Zentraleinrichtung bekannt ist. Nur wenn die entsprechende Adresse mit übermittel wird, wird dem angesprochenen Verbraucher das Signal zugeordnet.

Der Erfindung liegt die Aufgabe zugrunde, bekanntes Verfahren und bekannte Schaltungsanordnung dahingehend zu verbessern, daß eine Initialisierung und Inbetriebnahme der Verbraucher vereinfacht ist, wobei gleichzeitig eine einfache Erweiterung der Schaltungsanordnung mit erhöhter Flexibilität möglich ist

Diese Aufgabe wird verfahrensgemäß dadurch gelöst, daß ein Initialisierungsverbraucher das Initialisierungssignal empfängt und sich zuordnet und anschließend über die Datenverbindung ein Quittungssignal über die Zuordnung des Initialisierungssignals an die Zentraleinrichtung übermittelt Auf diese Weise ordnet sich der Initialisierungsverbraucher das Signal selbst zu, das von der Zentraleinrichtung generell an alle Verbraucher übermittel wird. Die bereits initialisierten Verbraucher oder Verbraucher bei denen eine entsprechende Initialisierung nicht notwendig ist, empfangen dabei das Initialisierungssignal nicht oder leiten es weiter, ohne daß eine entsprechende Eigenzuordnung dieses Signals bei diesen Verbrauchern erfolgt. Die Zentraleinrichtung kann nach Empfang des Quittungssignals ein weiteres Initialisierungssignal ausgeben, das von einem weiteren Initialisierungsverbraucher empfangen, sich zugeordnet und quittiert wird. Diese Ausgabe und die Zuordnung der Initialisierungssignale von Zentraleinrichtung und entsprechend vom Initialisierungsverbraucher kann im wesentlichen beliebig wiederholt werden.

Vorrichtungsgemäß wird die Aufgabe dadurch gelöst, daß die Zentraleinrichtung eine Adressengeneriereinrichtung zur Erzeugung und Übermittlung von Adreßsignalen und der Verbraucher eine Adressenzuordnungseinrichtung zur Eigenzuordnung einer über die Datenverbindung von der Zentraleinrichtung erhaltenen Adreßsignal entsprechenden Adresse aufweisen.

Bei der Verwendung eines Adreßsignals als Initialisierungssignal generiert die Zentraleinrichtung eine noch nicht vergebene Adresse, übermittelt diese an alle Verbraucher mittels der Datenverbindung, wobei das Adreßsignal von einem Verbraucher oder Initialisierungsverbraucher empfangen wird, der noch unadressiert ist. Bei Empfang des Adreßsignals ordnet sich der Verbraucher die entsprechende Adresse zu und quittiert die Adressenzuordnung mittels des Quittungssignals gegenüber der Zentraleinrichtung. Die Zentraleinrichtung kann dann weitere Adressen generieren und an Verbraucher übermitteln.

Durch eine solche Eigenzuordnung der Adressen erhält jeder Verbraucher eine eindeutige Adresse, wobei die entsprechende Zuordnung nur für bisher unadressierte Verbraucher erfolgt.

Statt der Datenverbindung über die elektrischen Versorgungsleitungen kann die Datenverbindung auch durch eine separate Datenleitung erfolgen, die ein- oder mehradrig ausgebildet sein kann. Von Vorteil ist, wenn Verbraucher und Zentraleinrichtung in Reihe bezüglich dieser Datenleitung verschaltet sind. Auf diese Weise erreichen die von der Zentraleinrichtung ausgegebenen Signale alle Verbraucher und sind durch einen bisher noch nicht angesprochenen Verbraucher einfach sich selbst zuordbar.

Um bei dieser Reihenschaltung in einfacher Weise eine Weiterleitung von Signalen zu ermöglichen, wenn ein Verbraucher bereits initialisiert ist oder sich eine Adresse zugeordnet hat, kann der Initialisierungsverbraucher nach Selbstzuordnung seines Initialisierungssignals ein weiteres (-), Initialisierungs- oder Adreßsignal (von der Zentraleinrichtung empfangenes zur Übermittlung an andere Initialisierungsverbraucher weiterleiten.

Diese Weiterleitung von Initialisierungs- oder Adreßsignalen ist insbesondere von Vorteil, wenn bei einer Erst-Inbetriebnahme einer Schaltungsanordnung mit Zentraleinrichtung und elektrischen Verbrauchern letzteren eine Adresse zugeordnet werden muß. Dies kann dann dadurch erfolgen, daß nacheinanderfolgend jeder in Reihe bezüglich der Datenleitung verschaltete, noch unadressierte Verbraucher als Initialisierungsverbraucher sich eine Adresse zuordnet, die er durch das Adreßsignal der Zentraleinrichtung erhält, anschließend den Empfang des Initialisierungs- oder Adreßsignals quittiert und nachfolgend zu anderen Verbrauchern zur Weiterleitung weiterer Initialisierungs- oder Adreßsignale durchschaltet. Auf diese Weise sind beispielsweise aus dem Stand der Technik nach DE 195 29 751 bekannte Codierschalter bei jedem Verbraucher unnötig. Mittels dieser Codierschalter wird jedem Verbraucher eine Adresse durch Einstellen einer entsprechenden Adresse durch beispielsweise einen Installateur zugeordnet. Dabei ist darauf zu achten, daß es zu keiner Doppeladressierung kommt. Die Adressierung ist sehr zeitaufwendig und kostenintensiv und bei fertig installierten Verbrauchern ist nochmals eine Kontrolle der Schalterstellung und damit der Adressierung notwendig. Außerdem ist eine solche Adressierung mit zunehmender Anzahl von Verbrauchern für den Betreiber verwirrend, da die üblicherweise eingesetzten Drehcodierschalter maximal 16 Adressen zulassen und bei einer größeren Anzahl von Verbrauchern zusätzliche Schalter erforderlich sind.

Bei dem erfindungsgemäßen Verfahren oder Schaltungsanordnung gibt es keine hardwaremäßige Beschränkung bei der Adressierung, da sich die Verbraucher der Reihe nach die von der Zentraleinrichtung übermittelten Adressen zuordnen und abspeichern. Nach Zuordnung und Abspeicherung erfolgt eine Quittierung der Adressübernahme, so daß weitere Adreßsignale von der Zentraleinrichtung ausgegeben werden können. Dies erfolgt solange, bis alle Verbraucher sich eine Adresse zugeordnet haben.

Die Abspeicherung der Adresse kann dabei vorzugsweise nichtflüchtig, wie beispielsweise in einem EEPROM, erfolgen. Auf diese Weise ist nach einem Stromausfall bei erneuter Inbetriebnahme gesichert, daß die Adressen noch gespeichert sind.

Dabei kann vorzugsweise jeder Verbraucher eine Durchschalteinrichtung zum Weiterleiten der Adreßsignale aufweisen, die in Abhängigkeit von einer Eigenzuordnung einer Adresse bei diesem Verbraucher betätigbar ist.

Die Durchschalteinrichtung kann dabei elektronisch oder elektromagnetisch arbeiten, wobei beispielsweise nach erfolgter Zuordnung eine Adresse bei dem jeweiligen Verbraucher dieser durch einen elektromechanischen Schalter die Datenleitung durchschaltet und zumindest die weiteren Adreßsignale von der Zentraleinrichtung direkt an weitere Verbraucher weiterleitet.

Die Weiterleitung derAdreßsignale oder Durchschaltung der Datenleitung kann auch dadurch erfolgen, daß der Verbraucher, der beispielsweise ein Interface zum Anschluß an die Datenleitung und einen Mikroprozessor mit Speichereinrichtung zur Eigenzuordnung und zum Speichern eine Adresse aufweist, mittels des Mikroprozessor und seines Interfaces ein Adreßsignal an den nächsten Verbraucher weiterleitet. Auf diese Weise empfängt zwar ein bereits adressierter Verbraucher ein weiteres Adreßsignal, leitet dies aber selbsttätig über die Datenleitung an die in der Reihenschaltung folgenden Verbraucher weiter.

In diesem Zusammenhang ist es möglich, daß der Verbraucher ein empfangenes Signal mittels eines Signalverstärkers oder eines Repeaters verstärkt und weitergibt. Dadurch kann die Datenleitung zur Zentraleinheit eine größere Länge aufweisen, da ein Spannungsabfall auf der Datenleitung ausgeglichen wird und auch bei einer begrenzten Sendeleistung der Zentraleinrichtung eine Vielzahl von Verbrauchern ansteuerbar sind. Dadurch ist nur noch die Leitungslänge von Verbraucher zu Verbraucher relevant.

Um an jedem Verbraucher die von diesem sich zugeordnete Adresse von außen ablesen zu können, kann der Verbraucher eine Anzeigeeinrichtung zur Darstellung zumindert seiner Adresse aufweisen. Es ist allerdings auch denkbar, daß die Adressen direkt bei der Installation mit dafür vorgesehenen Aufklebem auf den Verbrauchern angebracht oder in entsprechenden Installationsplänen für die Schaltungsanordnung eingetragen werden. Dabei muß dann darauf geachtet werden, daß die Adressen in korrekter Reihenfolge der Verbraucher bezüglich der Zentraleinrichtung von außen zugeordnet werden. Bei der Erst-Inbetriebnahme erfolgt dann die Zuordnung der entsprechenden Adressen selbsttätig durch die verschiedenen Verbraucher in der festgelegten Reihenfolge.

Bei dem bekannten Stand der Technik erfolgt eine Meldung vom Verbraucher an die Zentraleinrichtung, wenn beispielsweise eine Störung auftritt. Dadurch ist eine Überwachung des Gesamtsystems möglich. Eine solche Übermittlung einer Meldung ist auch bei der erfindungsgemäßen Schaltungsanordnung und dem entsprechenden Verfahren möglich.

Allerdings werden solche Zentraleinrichtungen nicht regelmäßig abgefragt oder inspiziert, da sie in der Regel in elektrischen Betriebsräumen oder in selten benutzten Räumen untergebracht sind und damit nicht ständig unter Beobachtung stehen. Daher ist es bei dem bekannten Stand der Technik notwendig, die Zentraleinrichtung von Zeit zu Zeit aufzusuchen und abzufragen.

Erfindungsgemäß kann die Überwachung der Verbraucher dadurch vereinfacht werden, daß beispielsweise jeder Verbraucher mittels seiner Anzeigeeinrichtung, wie einem LED oder LCD, seinen Status anzeigt oder entsprechende Fehlermeldungen ausgibt Dadurch kann direkt am Verbraucher eine Fehlfunktion oder ein Statusfehler festgestellt und abgestellt werden.

Neben der Anzeigeeinrichtung, die beispielsweise auch zur Darstellung der Adresse verwendet wird, kann der Verbraucher eine weitere Statusanzeigeeinrichtung und/oder abfrageeinrichtung aufweisen. Mittels dieser Anzeige- oder Abfrageeinrichtung können beispielsweise durch einen Dialog über die Datenleitung Störungsmeldungen oder der Status anderer Verbraucher dargestellt oder abgefragt werden. Eine Abfrage oder Übermittlung dieser Informationen kann mittels einer Infrarot- oder Funkstrecke zu einem mobilen Handterminal erfolgen. Dadurch ist direkt an dem jeweiligen Verbraucher oder an dem Handterminal der Gesamtstatus des Systems darstellbar, um möglichst schnell auf Störungen im System reagieren zu können. Hierdurch wird die Reaktionszeit zur Veranlassung einer Fehlerbehebung minimiert und zusätzlich eine zeitsparende Serviceunterstützung geboten. Ein Aufsuchen der Zentraleinrichtung zur Abfrage des Systemstatus oder des Status eines Verbrauchers muß nicht mehr erfolgen, sondern diese Information kann an jedem Verbraucher abgefragt werden.

Im folgenden werden vorteilhafte Ausführungsbeispiele der Erfindung anhand der in der Zeichnung beigefügten Figuren mehr erläutert und beschrieben.

Es zeigen:
- Fig. 1: eine Prinzipskizze eines Ausschnittes aus einer erfindungsgemäßen Schaltungsanordnung mit Zentraleinrichtung und einer Anzahl von elektrischen oder elektronisches Verbrauchern;
- Fig. 2: ein Ausführungsbeispiel für eine Durchschalteinrichtung bei einem Verbraucher, und
- Fig. 3: ein weiteres Ausführungsbeispiel für eine Durchschalteinrichtung bei einem Verbraucher.

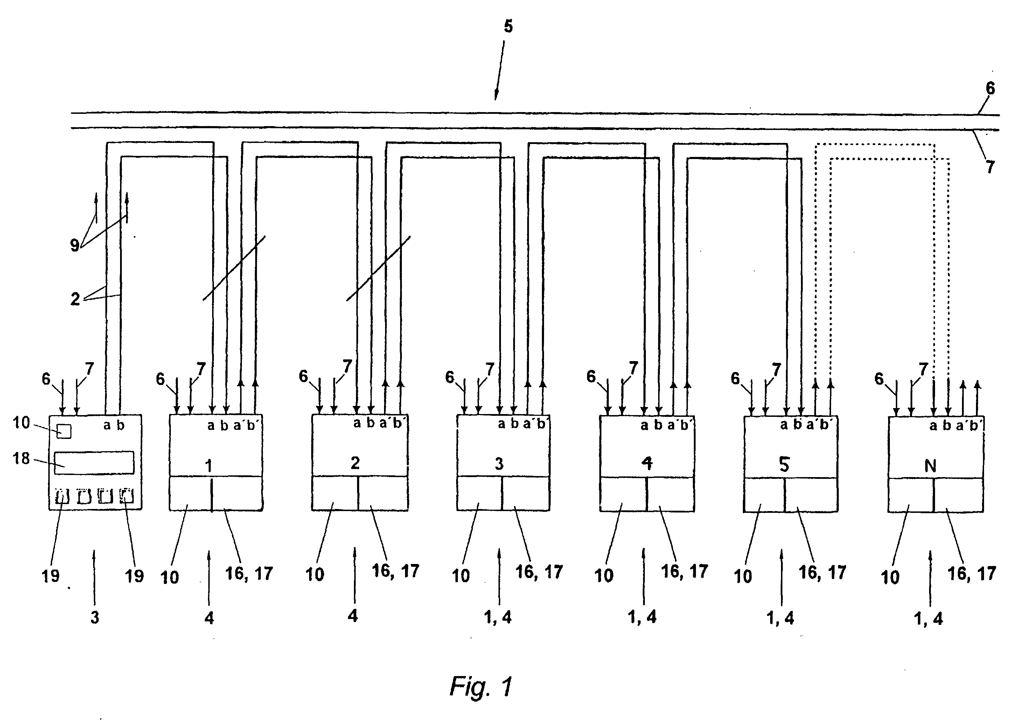

In Fig. 1 ist eine erfindungsgemäße Schaltungsanordnung 5 zur Durchführung des erfindungsgemäßen Verfahrens dargestellt.

Die Schaltungsanordnung 5 weist eine Vielzahl von elektrischen oder elektronischer Verbrauchern 4 auf, von denen wenigstens einer ein Initialisierungsverbraucher 1 ist. In Fig. 1 sind alle Verbraucher 4 gleichartig dargestellt, wobei dies nur zur Vereinfachung erfolgt. Die Verbraucher können beispielsweise Leuchtmittel wie batteriebetriebene Notleuchten, Übermittlungs- und Empfangseinrichtungen, Thermostaten, Sensoren oder dergleichen sein.

Die Verbraucher 4 sind parallel bezüglich von elektrischen Versorgungsleitungen 6, 7 geschaltet. An jedem der Verbraucher sind die entsprechenden Anschlüsse für die Versorgungsleitungen 6, 7 dargestellt.

Mit einer ebenfalls von den elektrischen Versorgungsleitungen 6, 7 versorgten Zentraleinrichtung 3 sind die Verbraucher 4 in Reihe bezüglich einer Datenleitung 2 als Datenverbindung verschaltet. Diese Datenleitung kann als Durchgangsverdrahtung ausgebildet sein.

Die Zentraleinrichtung 3 weist zwei Ausgänge a, b auf, über die beispielsweise ein Adreßsignal 9 der Datenleitung 2 zuführbar ist. Dieses Adreßsignal wird an entsprechende Eingänge a, b bei dem ersten in der Reihenschaltung folgenden Verbraucher 4 empfangen und von dort über Ausgänge a', b' über die Datenleitung an weitere Eingänge a, b zum nächsten Verbraucher übermittelt. Dies erfolgt analog über die gesamte Reihenschaltung von dem ersten bis zum N-ten Verbraucher am Ende der Reihenschaltung, siehe die Nummerierung der einzelnen Verbraucher 4.

Die Zentraleinrichtung 3 weist eine Anzeigeeinrichtung 18 und eine Reihe von Bedientasten oder -elemente 19 auf. Mittels dieser kann beispielsweise eine Statusabfrage der Schaltungsanordnung erfolgen. Weiterhin weist die Zentraleinrichtung 3 insbesondere über eine Adressengeneriereinrichtung 10 auf.

Jeder der Verbraucher 4 weist eine Adressenzuordnungseinrichtung 10 und eine Anzeigeeinrichtung 16 bzw. Statusanzeige- /-abfrageeinrichtung 17 auf. Dies gilt auch für Verbraucher unterschiedlicher Funktionen, wie oben ausgeführt.

Mittels der Adressenzurordnungseinrichtung 10 ordnet sich jeder Verbraucher 4 selbst eine Adresse zu, die mittels des Adreßsignals 9 über die Datenleiten 2 von der Zentraleinrichtung 3 übertragen wird. Die Zuordnung der Adressen erfolgt sukzessive, ausgehend vom ersten Verbraucher direkt benachbart zur Zentraleinrichtung 3 bis zum N-ten Verbraucher am Ende der Schaltungsanordnung.

Im folgenden wird kurz die Zuordnung der Adresse beschrieben, wobei der erste und zweite Verbraucher sich bereits eine Adresse zugeordnet haben und die übrigen Verbraucher als Initialisierungsverbraucher 1 sich noch eine Adresse zuordnen müssen.

Bei einer Erst-Inbetriebnahme übermittelt die Zentraleinrichtung 3 ein Adreßsignal 9, wobei nach Fig. 1 bereits der erste und zweite Verbraucher ein entsprechendes Adreßsignal empfangen, sich zugeordnet und dessen Empfang quittiert haben. Als nächstes ordnet sich der in der Reihenanordnung als dritter angeordnete, noch unadressierte Initialisierungsverbraucher 1 eine Adresse zu. Der dritte Verbraucher empfängt das Adreßsignal 2 über die Datenleitung 2 vom zweiten Verbraucher. Er ordnet sich die Adresse zu und speichert sie vorzugsweise nichtflüchtig ab. Anschließend sendet er ein Quittungssignal über die Datenleitung 2 zur Zentraleinrichtung 3. Dann wird die Datenleitung 2 durchgeschaltet, um bei folgenden Adreßsignalen die Weiterleitung an noch unadressierte Initialisierungsverbraucher zu ermöglichen.

Dieses wird solange fortgesetzt, bis auch der letzte Verbraucher N in der Reihenanordnung sich eine Adresse zugeordnet, gespeichert und kein Quittungssignal an die Zentraleinrichtung 3 übermittelt hat. Anschließend gibt die Zentraleinrichtung 3 zumindest ein weiteres Adreßsignal aus. Da bezüglich der in diesem Signal erhaltenen Adresse keine Zuordnung durch einen weiteren Verbraucher erfolgt und ein entsprechendes Quittungssignal ausgegeben wird, erkennt die Zentraleinrichtung das Ende der Adreßzuordnung und kann gleichzeitig durch die Anzahl der Quittungssignale die Anzahl der Verbraucher bestimmen. Es ist dabei möglich, daß in jedem Quittungssignal außerdem Informationen über den entsprechenden Verbraucher enthalten sind, so daß die Zentraleinrichtung neben der Anzahl der angeschlossen Verbraucher auch deren Art, Status oder dergleichen über das Quittungssignal erkennt.

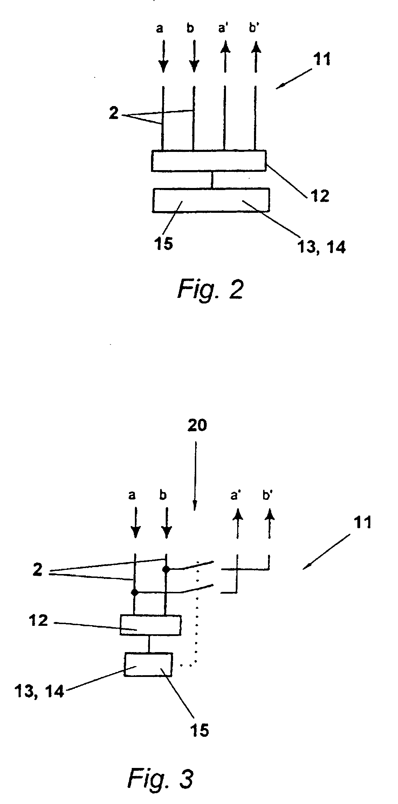

In Fig. 2 ist ein erstes Ausführungsbeispiel für eine Durchschalteinrichtung 11 dargestellt. Mittels dieser wird nach erfolgter Zuordnung eines Adreßsignals die Datenleitung an einen Verbraucher von den Eingängen a, b zu Ausgängen a', b' durchgeschaltet.

Die Ein- und Ausgänge a, b, a', b' sind mit einem Interface 12 verbunden, das Signale weiter an einen Mikroprozessor 13 übermittelt. Weiterhin ist das Interface 12 durch den Mikroprozessor so steuerbar, daß nach erfolgter Abspeicherung eine Adresse in einer dem Mikroprozessor zugeordneten Speichereinrichtung 14 direkt eine Durchschaltung im Interface 12 zwischen Ein- und Ausgängen erfolgt. Auf diese Weise wird zumindest jedes weitere empfangene Adreßsignal direkt an folgende Verbraucher weitergeleitet.

Dabei kann dem Mikroprozessor 13 weiterhin eine Signalverstärkungseinrichtung 15 zugeordnet sein, durch die ein empfangenes Adreßsignal verstärkt und an anschließende Verbraucher weitergegeben wird.

Bezüglich der Quittungssignale erfolgt die Übermittlung dieses Signals analog in umgekehrter Richtung.

In Fig. 3 ist ein zweites Ausführungsbeispiel einer Durchschalteinrichtung 11 dargestellt. Bei dieser Einrichtung sind ebenfalls Eingänge a, b der Datenleitung 2 mit einem Interface 12 verbunden. Dieses wiederum ist mit dem Mikroprozessor 13 in Verbindung, dem entsprechend eine Speichereinrichtung 14 und eine Signalverstärkungseinrichtung 15 zugeordnet sein können.

Weiterhin kann ein Mikroprozessor eine Schalteinrichtung 20 in Abhängigkeit einer bereits erfolgten Zuordnung eines Adreßsignals steuern. Solange ein Verbraucher mit einer Durchschalteinrichtung nach Fig. 3 noch nicht initialisiert ist oder sich eine Adresse zugeordnet hat, ist die Schalteinrichtung 20 offen, so daß keine Verbindung zwischen den Eingängen a, b und den Ausgängen a', b' besteht. Hat dann dieser Verbraucher sich eine Adresse zugeordnet, abgespeichert und die Zuordnung quittiert, wird die Schalteinrichtung 20 betätigt. Anschließend können dann weitere Adreß- oder Initialisierungssignale direkt von den Eingängen a, b zu den Ausgängen a', b' weitergeleitet werden. Analog zum Ausführungsbeispiel nach Fig. 2 kann eine Verstärkung der weitergeleiteten Adreßsignale erfolgen.

Die Anzeige- und Abfrageeinrichtungen 16, 17 eines jeden Verbrauchers, siehe Fig. 1, können ebenfalls durch den Mikroprozessor 13 gesteuert werden. Über diese Anzeige- und Abfrageeinrichtungen ist beispielsweise die sich vom Verbraucher zugeordnete Adresse und sein Status darstellbar oder an beispielsweise ein mobiles Handterminal oder dergleichen übertragbar. Weiterhin sind auch Gesamtstatusmeldungen bezüglich aller Verbraucher darstellbar und/oder übertragbar.

## Patentansprüche

1. Verfahren zur Initialisierung und Überwachung wenigstens eines elektrischen oder elektronischen Initialisierungsverbrauchers (1), insbesondere eines Leuchtmittels, aus einer Mehrzahl mittels einer Datenverbindung (2) mit einer Zentraleinrichtung (3) verbundenen, elektrischen oder elektronischen Verbraucher (4), wobei die Zentraleinrichtung zumindest ein Initialisierungssignal über die Datenverbindung (2) an die Verbraucher (1, 4) übermittel, **dadurch gekennzeichnet, daß**
- der Initialisierungsverbraucher (1) das Initialisierungssignal empfängt und sich zuordnet, und
- der Initialisierungsverbraucher (1) über die Datenverbindung (2) ein Quittungssignal über die Zuordnung des Initialisierungssignals an die Zentraleinrichtung (3) übermittelt.

2. Verfahren nach Anspruch 1, **dadurch gekennzeichnet, daß** die Zentraleinrichtung (3) als Initialisierungssignal ein Adreßsignal übermittelt, mittels welchem sich der Initialisierungsverbraucher eine Adresse zuordnet

3. Verfahren nach Anspruch 1 oder 2, **dadurch gekennzeichnet, daß** die Verbraucher (1, 4) und die Zentraleinrichtung (3) in Reihe bezüglich einer Datenleitung (2) als Datenverbindung verschaltet sind.

4. Verfahren nach wenigstens einem der vorangehenden Ansprüche, **dadurch gekennzeichnet, daß** der Initialisierungsverbraucher nach erfolgter Zuordnung des Initialisierungs- oder Adreßsignals ein weiteres Initialisierungs- oder Adreßsignal von der Zentraleinrichtung (3) zur Übermittlung an andere Initialisierungsverbraucher weiterleitet.

5. Verfahren nach wenigstens einem der vorangehenden Ansprüche, **dadurch gekennzeichnet, daß** zur Initialisierung oder Adressierung mehrerer Verbraucher (1, 4) bei einer Erstinbetriebnahme aufeinanderfolgend jeder in Reihe bezüglich der Datenleitung (2) verschaltete, noch unadressierte Verbraucher (1, 4) als Initialisierungsverbraucher sich eine Adresse zuordnet, deren Empfang quittiert und zum nachfolgenden, unadressierten Verbraucher durchschaltet.

6. Verfahren nach wenigstens einem der vorangehenden Ansprüche, **dadurch gekennzeichnet, daß** der Initialisierungsverbraucher (1) seine Adresse insbesondere nichtflüchtig abspeichert.

7. Verfahren nach wenigstens einem der vorangehenden Ansprüche, **dadurch gekennzeichnet, daß** das Durchschalten der Datenleitung (2) elektronisch oder elektromechanisch erfolgt.

8. Verfahren nach wenigstens einem der vorangehenden Ansprüche, **dadurch gekennzeichnet, daß** das Durchschalten der Datenleitung (2) durch Übermittlung eines Adreßsignals von einem vorangehend adressierten Verbraucher (1, 4) zum nachfolgenden Initialisierungsverbraucher (1) über die Datenleitung (2) erfolgt.

9. Verfahren nach wenigstens einem der vorangehenden Ansprüche, **dadurch gekennzeichnet, daß** die Zentraleinrichtung (3) nach Ausbleiben eines Quittungssignals auf ein ausgegebenes Adreßsignal die Ausgabe weiterer Adreßsignale einstellt.

10. Verfahren nach wenigstens einem der vorangehenden Ansprüche, **dadurch gekennzeichnet, daß** wenigstens einige der durchschaltenden Verbraucher (1, 4) die weiterzuleitenden Signale verstärken.

11. Verfahren nach wenigstens einem der vorangehenden Ansprüche, **dadurch gekennzeichnet, daß** jeder Verbraucher (1, 4) die sich zugeordnete Adresse anzeigt.

12. Verfahren nach wenigstens einem der vorangehenden Ansprüche, **dadurch gekennzeichnet, daß** die Verbraucher (1, 4) ausgehend von der Zentraleinrichtung (3) entlang der Datenleitung (2) durchnummeriert sind.

13. Verfahren nach wenigstens einem der vorangehenden Ansprüche, **dadurch gekennzeichnet, daß** zumindest einige Verbraucher (1, 4) ihren Status und/oder den Status anderer Verbraucher (1, 4) anzeigen und/oder an eine Abfrageeinrichtung übermitteln.

14. Schaltungsanordnung (5) mit wenigstens einer Zentraleinrichtung (3) und einer Anzahl von mit dieser über eine Datenverbindung (2) verschalteten elektrischen oder elektronischen Verbraucher (1, 4), insbesondere Leuchtmittel, wobei Zentraleinrichtung (3) und Verbraucher (1, 4) an elektrische Versorgungsleitungen (6, 7) angeschlossen sind, **dadurch gekennzeichnet, daß** die Zentraleinrichtung (3) eine Adressgeneriereinrichtung (8) zur Erzeugung und Übermittlung von Adreßsignalen und der Verbraucher (1, 4) eine Adresszuordnungseinrichtung (10) zur Eigenzuordnung einer über die Datenverbindung (2) von der Zentraleinrichtung (3) erhaltenen, dem Adreßsignal entsprechenden Adresse aufweist.

15. Schaltunganordnung nach Anspruch 14, **dadurch gekennzeichnet, daß** die Verbraucher (1, 4) in Reihe bezüglich einer Datenleitung (2) als Datenverbindung verschaltet sind.

16. Schaltunganordnung nach Anspruch 14 oder 15, **dadurch gekennzeichnet, daß** der Verbraucher (1, 4) eine Durchschalteinrichtung (11) zur Weiterleitung eines Adreßsignals (9) über die Datenleitung (2) aufweist.

17. Schaltunganordnung nach wenigstens einem der Ansprüche 14 bis 16, **dadurch gekennzeichnet, daß** die Durchschalteinrichtung (11) in Abhängigkeit von der Eigenzuordnung einer Adresse vom Verbraucher (1, 4) betätigbar ist.

18. Schaltunganordnung nach wenigstens einem der Ansprüche 14 bis 17, **dadurch gekennzeichnet, daß** der Verbraucher (1, 4) eine elektronische oder elektromechanische Durchschalteinrichtung (11) aufweist.

19. Schaltunganordnung nach wenigstens einem der Ansprüche 14 bis 18, **dadurch gekennzeichnet, daß** der Verbraucher (1, 4) ein Interface (12) zum Anschluß an die Datenleitung (2) und einen Mikroprozessor (13) mit Speichereinrichtung (14) zur Eigenzuordnung und Speicherung einer Adresse aufweist.

20. Schaltunganordnung nach wenigstens einem der vorangehenden Ansprüche 14 bis 19, **dadurch gekennzeichnet, daß** der Verbraucher (1, 4) einen Signalverstärker (15) aufweist.

21. Schaltunganordnung nach wenigstens einem der vorangehenden Ansprüche 14 bis 20, **dadurch gekennzeichnet, daß** der Verbraucher (1, 4) eine Anzeigeeinrichtung (16) zur Darstellung seiner Adresse aufweist.

22. Schaltunganordnung nach wenigstens einem der vorangehenden Ansprüche 14 bis 21, **dadurch gekennzeichnet, daß** der Verbraucher (1, 4) eine Statusanzeige-(17) und/oder -abfrageeinrichtung aufweist.

## Claims

1. Method for initialising and monitoring at least one electric or electronic initialisation consumer (1), in particular a lamp, of a plurality of electric or electronic consumers (4), connected to a central device (3) by means of a data connection (2), wherein the central device transmits at least one initialisation signal to the consumers (1, 4) via the data connection (2), **characterised in that**
- the initialisation consumer (1) receives and assigns to itself the initialisation signal and
- the initialisation consumer (1) transmits to the central device (3) an acknowledgement signal of the assignment of the initialisation signal via the data connection (2).

2. Method according to claim 1, **characterised in that** the central device (3) transmits as initialisation signal an address signal, by means of which the initialisation consumer assigns itself an address.

3. Method according to claim 1 or 2, **characterised in that** the consumers (1, 4) and the central device (3) are connected as a data connection in series with respect to a data line (2).

4. Method according to at least one of the preceding claims, **characterised in that**, after assignment of the initialisation or address signal has taken place, the initialisation consumer forwards a further initialisation or address signal from the. central device (3) for transmitting to other initialisation consumers.

5. Method according to at least one of the preceding claims, **characterised in that** for initialisation or addressing of several consumers (1, 4), on first being taken into service, each still unaddressed consumer (1, 4), connected in series with respect to the data line (2), as initialisation consumer assigns itself in succession an address, acknowledges its receipt and switches through to the following unaddressed consumer.

6. Method according to at least one of the preceding claims, **characterised in that** the initialisation consumer (1) stores its address in particular as non-volatile.

7. Method according to at least one of the preceding claims, **characterised in that** through-switching the data line (2) takes place electronically or electromechanically.

8. Method according to at least one of the preceding claims, **characterised in that** through-switching the data line (2) takes place by transmitting an address signal from a previously addressed consumer (1, 4) to the following initialisation consumer (1) via the data line (2).

9. Method according to at least one of the preceding claims, **characterised in that** if an acknowledgement signal fails to appear when an address signal is output the central device (3) begins output of further address signals.

10. Method according to at least one of the preceding claims, **characterised in that** at least some of the through-switched consumers (1, 4) amplify the signals to be forwarded.

11. Method according to at least one of the preceding claims, **characterised in that** each consumer (1, 4) displays the address it has assigned itself.

12. Method according to at least one of the preceding claims, **characterised in that** the consumers (1, 4) are numbered consecutively along the data line (2), starting from the central device (3).

13. Method according to at least one of the preceding claims, **characterised in that** at least some consumers (1, 4) display and/or transmit to a interrogation device their status and/or the status of other consumers (1, 4).

14. Circuit arrangement (5) with at least one central device (3) and a number of electric or electronic consumers (1, 4), in particular lamps, connected to it via a data connection (2), wherein central device (3) and consumer (1, 4) are connected to electric supply lines (6, 7), **characterised in that** the central device (3) has an address generating device (8) for generating and transmitting address signals and the consumer (1, 4) has an address assigning device (10) for self-assigning an address received from the central device (3) via the data connection (2) and corresponding to the address signal.

15. Circuit arrangement according to claim 14, **characterised in that** the consumers (1, 4) are connected as a data connection in series with respect to a data line (2).

16. Circuit arrangement according to claim 14 or 15, **characterised in that** the consumer (1, 4) has a through-switching device (11) for forwarding an address signal (9) via the data line (2).

17. Circuit arrangement according to at least one of claims 14 to 16, **characterised in that** the through-switching device (11) is actuatable by the consumer (1, 4) as a function of the self-assignment of an address.

18. Circuit arrangement according to at least one of claims 14 to 17, **characterised in that** the consumer (1, 4) has an electronic or electromagnetic through-switching device (11).

19. Circuit arrangement according to at least one of claims 14 to 18, **characterised in that** the consumer (1, 4) has an interface (12) for connecting to the data line (2) and a microprocessor (13) with memory device (14) for self-assignment and storage of an address.

20. Circuit arrangement according to at least one of preceding claims 14 to 19, **characterised in that** the consumer (1, 4) has a signal amplifier (15).

21. Circuit arrangement according to at least one of preceding claims 14 to 20, **characterised in that** the consumer (1, 4) has a display device (16) for representing its address.

22. Circuit arrangement according to at least one of preceding claims 14 to 21, **characterised in that** the consumer (1, 4) has a status display device (17) and/or a interrogation device.

## Revendications

1. Procédé d'initialisation et de surveillance d'au moins un récepteur (1) électrique ou électronique à initialisation, en particulier d'un dispositif d'éclairage, parmi une pluralité de récepteurs (4) électriques ou électroniques reliés à une unité centrale (3) au moyen d'une liaison (2) de données, dans lequel l'unité centrale transmet au moins un signal d'initialisation par la liaison (2) de données aux récepteurs (1,4), **caractérisé en ce que**
- le récepteur (1) à initialisation reçoit le signal d'initialisation et se l'affecte,
- le récepteur (1) à initialisation transmet à l'unité centrale (3), par la liaison (2) de données, un signal d'acquittement relatif à l'affectation du signal d'initialisation.

2. Procédé selon la revendication 1, **caractérisé en ce que** l'unité centrale (3) transmet comme signal d'initialisation un signal d'adresse au moyen duquel une adresse est affectée au récepteur à initialisation.

3. Procédé selon la revendication 1 ou 2, **caractérisé en ce que** le récepteur (1, 4) et l'unité centrale (3) sont branchés en série par rapport à une ligne (2) de données comme liaison de données.

4. Procédé selon au moins une des revendications précédentes, **caractérisé en ce que** le récepteur à initialisation, après une affectation réussie du signal d'initialisation. ou d'adresse, retransmet un autre signal d'initialisation ou d'adresse issu de l'unité centrale (3) pour une transmission à d'autres récepteurs à initialisation.

5. Procédé selon au moins une des revendications précédentes, **caractérisé en ce que** pour une initialisation ou un adressage de plusieurs récepteurs (1, 4) lors d'une première mise en service, chaque récepteur (1, 4) reliés en série par rapport à la ligne (2) de données mais non encore adressé s'affecte en tant que récepteur à initialisation une adresse dont la réception est acquittée et commute vers le récepteur non adressé suivant.

6. Procédé selon au moins une des revendications précédentes, **caractérisé en ce que** le récepteur (1) à initialisation stocke en particulier son adresse de manière non volatile.

7. Procédé selon au moins une des revendications précédentes, **caractérisé en ce que** la commutation de la ligne (2) de données a lieu de manière électronique ou électromécanique.

8. Procédé selon au moins une des revendications précédentes, **caractérisé en ce que** la commutation de la ligne (2) de données a lieu au moyen de la transmission d'un signal d'adresse provenant d'un récepteur (1, 4) adressé précédemment vers le récepteur (1) suivant à initialisation par la ligne (2) de données. `

9. Procédé selon au moins une des revendications précédentes, **caractérisé en ce que** l'unité centrale (3) après la non-apparition d'un signal d'acquittement sur un signal d'adresse émis interrompt l'émission d'autres signaux d'adresse.

10. Procédé selon au moins une des revendications précédentes, **caractérisé en ce qu'**au moins certains des récepteurs (1, 4) ayant transmis amplifient les signaux à retransmettre.

11. Procédé selon au moins une des revendications précédentes, **caractérisé en ce que** chaque récepteur (1, 4) affiche l'adresse qui lui est affectée.

12. Procédé selon au moins une des revendications précédentes, **caractérisé en ce que** les récepteurs (1, 4) sont numérotés à partir de l'unité centrale (3) le long de la ligne (2) de données.

13. Procédé selon au moins une des revendications précédentes, **caractérisé en ce qu'**au moins certains des récepteurs (1, 4) affichent leur état et/ou l'état d'autres récepteurs (1, 4) et/ou les transmettent à un dispositif d'interrogation.

14. Disposition de circuit (5) ayant au moins une unité centrale (3) et un nombre de récepteurs (1, 4) électriques ou électroniques, en particulier des dispositifs d'éclairage, reliés à elle par l'intermédiaire d'une liaison (2) de données, l'unité centrale (3) et les récepteurs (1, 4) étant raccordés à des lignes (6, 7) d'alimentation électrique, **caractérisée en ce que** l'unité centrale (3) présente un dispositif générateur (8) d'adresse pour produire et transmettre des signaux d'adresse et que le récepteur (1, 4) présente un dispositif (10) d'affectation d'adresse pour s'affecter à lui-même une adresse correspondant au signal d'adresse et reçue de l'unité centrale (3) par la liaison (2) de données.

15. Disposition de circuit selon la revendication 14, **caractérisée en ce que** les récepteurs (1, 4) sont branchés en série par rapport à une ligne (2) de données comme liaison de données.

16. Disposition de circuit selon la revendication 14 ou 15, **caractérisée en ce que** le récepteur (1, 4) présente un dispositif (11) de commutation pour retransmettre un signal (9) d'adresse par la ligne (2) de données.

17. Disposition de circuit selon au moins l'une des revendications 14 à 16, **caractérisée en ce que** le dispositif (11) de commutation peut être activé par le récepteur (1, 4) en fonction de l'affectation propre d'une adresse.

18. Disposition de circuit selon au moins l'une des revendications 14 à 17, **caractérisée en ce que** le récepteur (1, 4) présente un dispositif (11) de commutation électronique ou électromécanique.

19. Disposition de circuit selon au moins l'une des revendications 14 à 18, **caractérisée en ce que** le récepteur (1, 4) présente une interface (12) pour le raccordement à la ligne (2) de données et un microprocesseur (13) avec un dispositif (14) de mémoire pour l'affectation à lui-même et le stockage d'une adresse.

20. Disposition de circuit selon au moins l'une des revendications 14 à 19 précédentes, **caractérisée en ce que** le récepteur (1,4) présente un amplificateur (16) de signaux.

21. Disposition de circuit selon au moins l'une des revendications 14 à 20 précédentes, **caractérisée en ce que** le récepteur (1,4) présente un dispositif (16) d'affichage pour afficher son adresse.

22. Disposition de circuit selon au moins l'une des revendications 14 à 21 précédentes, **caractérisée en ce que** le récepteur (1,4) présente un dispositif (17) d'affichage d'état et/ou d'interrogation.
